# EUROPEAN PATENT APPLICATION

(11) **EP 4 576 326 A1**
(43) Date of publication of application: **25.06.2025**
(21) Application number: 23218319.4
(22) Date of filing: 19.12.2023
(51) Int. Cl.: H01M 10/613, H01M 10/643, H01M 10/6556, H01M 50/204, H01M 50/213

(54) **BATTERY CELL HOLDER FOR THERMAL MANAGEMENT OF A PLURALITY OF BATTERY CELLS**

(71) Applicant: Röchling Automotive SE, 68165 Mannheim (DE)
(72) Inventor: Gusmerotti, Daniele, 38017 Mezzolombardo (IT); Tremonti, Claudia, 39100 Bolzano (IT); Migliorini, Alberto, 10040 Caselette (IT); Montaruli, Mariagrazia, 70037 Ruvo di Puglia (IT)
(74) Representative: Ullrich & Naumann PartG mbB

(57) **Abstract**

This invention relates to a battery cell holder for thermal management, in particular for immersion thermal management, of a plurality of battery cells, comprising a first shell, a second shell, wherein the first shell and the second shell are attachable to each other forming a sealed inner space for arranging a plurality of battery cells within said inner space and wherein a thermal management fluid can be applied to the inner space for thermal management, preferably cooling the battery cells, wherein
a) at least one holding element separated from the first and second shell being adapted to fix a position of at least two of said plurality of battery cells and/or wherein
b) the first shell and/or the second shell are provided with fixing elements adapted to provide a fixing function for said plurality of battery cells, wherein the first shell and/or the second shell comprise at least one thermal management channel for thermal management of at least a part of the battery cells fixed by the first shell and/or the second shell.

## Description

The present invention relates to a battery cell holder for thermal management, in particular for immersion thermal management, of a plurality of battery cells, comprising a first shell, a second shell, wherein the first shell and the second shell are attachable to each other forming a sealed inner space for arranging a plurality of battery cells within said inner space and wherein a thermal management fluid can be applied to the inner space for thermal management, preferably cooling the battery cells.

The present invention further relates to a thermal management structure for a battery, comprising a battery cell holder and a plurality of battery cells for arranging in said battery cell holder.

The present invention further relates to a cell holding system comprising a battery cell holder with at least two holding elements.

The present invention even further relates to a battery, comprising a thermal management structure and a thermal management device, connectable to an inlet of said thermal management structure, for providing a thermal management fluid.

Devices for thermal management of battery cells are for instance known from EP 3 525 279 A1. EP 3 525 279 A1 discloses a battery pack with a flexible foil, which can be integrated with or coupled to a heat exchanging member, wherein the heat exchanging member is arranged to fit around the plurality of battery cells. The heat exchanging member can comprise means for guiding a cooling liquid there through for enhancing the cooling.

One of the problems however is that the flexible foil has to be elaborately placed between the different battery cells. A further problem is that an inefficient thermal management of the battery cells is provided with non-contact areas in which the flexible foil is not in contact with a surface of the battery cell. A further problem is that due to the foil structure, i.e. the small thickness, the thermal contact between the battery cells depends on the pressure of the cooling liquid inside the associated heat exchanging member and therefore can be limited.

To overcome these problems, WO 2017/067923 A1 discloses a temperature control device for a battery system, the battery system comprising a cuboid hollow body with at least one connection device for supplying and at least one connection device for discharging a separately temperature-controlled fluid, a plurality of regularly arranged and identically formed apertures extending from a first body surface to a second body surface, wherein a cylindrical battery cell is accommodated by each aperture, so that a fluid-tight liquid space is formed.

One of the disadvantages is however that an inefficient thermal management is provided, in particular at the upper and lower end faces of a battery cell. One of the further disadvantages is the non-uniform cooling due to the inefficient flow of the thermal management fluid. An even further disadvantage is that the provided structure has a large weight.

One of the objectives of the present invention is therefore to provide a battery cell holder, a thermal management structure, a cell holding system and a battery, which provide a larger contact area of the surface for the thermal management and a flexible and sufficient thermal management while providing a lesser weight, an increased structural stability allowing for safety in normal conditions and a faster charging/discharging of the battery cells.

One of the further objectives of the present invention is to provide an alternative battery cell holder, an alternative thermal management structure, an alternative cell holding system and an alternative battery.

The above-mentioned objectives may be solved by a battery cell holder for thermal management, in particular for immersion thermal management, of a plurality of battery cells, comprising
a first shell,
a second shell, wherein the first shell and the second shell are attachable to each other forming a sealed inner space for arranging a plurality of battery cells within said inner space and wherein a thermal management fluid can be applied to the inner space for thermal management, preferably cooling the battery cells,
characterized in that
   a) at least one holding element separated from the first and second shell being adapted to fix a position of at least two of said plurality of battery cells and/or that
   b) the first shell and/or the second shell are provided with fixing elements adapted to provide a fixing function for said plurality of battery cells, wherein the first shell and/or the second shell comprise at least one thermal management channel for thermal management of at least a part of the battery cells fixed by the first shell and/or the second shell.

The above-mentioned objectives may be solved by a thermal management structure for a battery, comprising a battery cell holder according to one of the claims 1-11 and a plurality of battery cells for arranging in said battery cell holder.

The above-mentioned objectives may be solved by a cell holding system, comprising a battery cell holder according to one of the claims 1-11, with at least two holding elements, wherein at least one holding structure of each of said at least two holding elements is arranged such to hold a same battery cell.

The above-mentioned objectives may be solved by a battery, comprising a thermal management structure according to one of the claims 12-13 and a thermal management device, connectable to an inlet of said thermal management structure, for providing a thermal management fluid, preferably a cooling fluid, to said thermal management structure for immersion thermal management of said battery cells, preferably wherein said cooling fluid is an electrically insulating fluid, preferably a dielectric fluid.

One of the advantages that may be achieved by the present invention is that a larger contact area of the surface for the thermal management and a flexible and sufficient thermal management is provided. A further advantage is that a lesser weight is enabled while allowing for an increased structural stability. This allows for safety in normal conditions and a faster charging/discharging of the battery cells.

Further features, advantages and preferred embodiments are disclosed or may become apparent in the following.

According to a preferred embodiment, said at least one holding element comprises a plurality of holding structures, each for a battery cell. This may allow for an increased stability while providing sufficient support for a plurality of battery cells.

According to a further preferred embodiment, a holding structure, at least partly, preferably completely, provides a ring-shaped reception for insertion of a battery cell. This may allow for a reliable fixing and an easy insertion of a cylindrical battery cell.

According to a further preferred embodiment, adjacent holding structures are offset to each other, preferably along a symmetry axis of the holding element. This may allow for an enhanced thermal management, since a thermal management fluid can be applied to a large surface area of each battery cell.

According to a further preferred embodiment, said holding structures of said at least one holding element are arranged in a regular hexagon structure around a center of said holding element, preferably wherein the center of said hexagon structure is provided as a holding structure. This may allow for a dense packaging of cylindrical battery cells.

According to a further preferred embodiment, said at least one holding element comprises at least one distance element for spacing said at least one holding element from the first shell and/or the second shell. This may allow for a large surface area to which a thermal management fluid can be applied, while providing sufficient support for fixing the battery cells.

According to a further preferred embodiment, said at least one distance element is adapted to be, preferably releasably, connectable to said first shell and/or said second shell, in particular by insertion of said at least one distance element into said first shell and/or said second shell. This may allow for an easy arrangement of the holding element.

According to a further preferred embodiment, said at least one distance element is adapted to space apart at least two adjacent battery cells when arranged in adjacent holding structures. This may allow for a more secure arrangement of the battery cells supporting the battery cells in case of a movement of the battery cells.

According to a further preferred embodiment, a plurality of distance elements is provided, arranged symmetrically to each other at said at least one holding element. This may allow for further enhancing the secure arrangement of the battery cells within the holding element.

According to a further preferred embodiment, said at least one thermal management channel has a T-shaped cross section. This may allow for a stable fixing of the battery cells with the first and second shell while providing a sufficient thermal management of the top and bottom of the battery cells enabling a flow of a thermal management fluid.

According to a further preferred embodiment, said at least one holding element, said first shell and/or said second shell are made of plastic. This may allow for a lightweight holding element or battery cell holder respectively.

According to a further preferred embodiment, a holding structure of a holding element covers 50% or less of a circumferential surface of a battery cell, preferably 40% or less, in particular 30% or less, preferably 20% or less, in particular 15% or less, preferably 10% or less, preferably 5% or less and 1 % or more, preferably 2% or more, preferably 4% or more, preferably 10% or more. This may allow for an efficient thermal management of the battery cells since a large area of the surface of each battery cell can be provided for applying a thermal management fluid.

According to a further preferred embodiment, the battery cells have cylindrical form and said holding elements are at least in part ring-shaped to hold the battery cells and/or that said at least one holding element is arranged between 40% and 60% of the distance in the inner space between the first shell and the second shell, preferably between 45% and 55%, preferably centrally. This may allow for a sufficient holding of the battery cells while providing a flexibility in terms of location of the holding element between the two shells.

There are several ways how to design and further develop the teaching of the present invention in an advantageous way. To this end, it is to be referred to the patent claims subordinate to the independent claims on the one hand and to the following explanation of further embodiments of the invention by way of example, illustrated by the figures on the other hand. In connection with the explanation of the further embodiments of the invention by the aid of the figures, generally further embodiments and further developments of the teaching will be explained.

In the drawings
- Fig. 1: shows in an exploded view part of a battery cell holder according to an embodiment of the present invention;
- Fig. 2: shows a holding element of a battery cell holder according to an embodiment of the present invention;
- Fig. 3: shows a cell holding system according to an embodiment of the present invention; and
- Fig. 4: shows a cross-section of a battery cell holder according to an embodiment of the present invention.

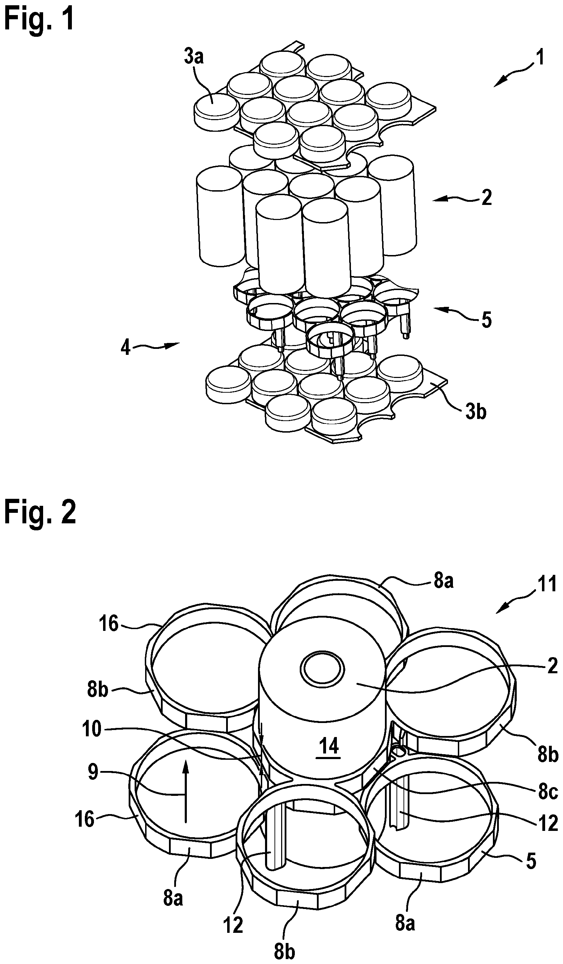

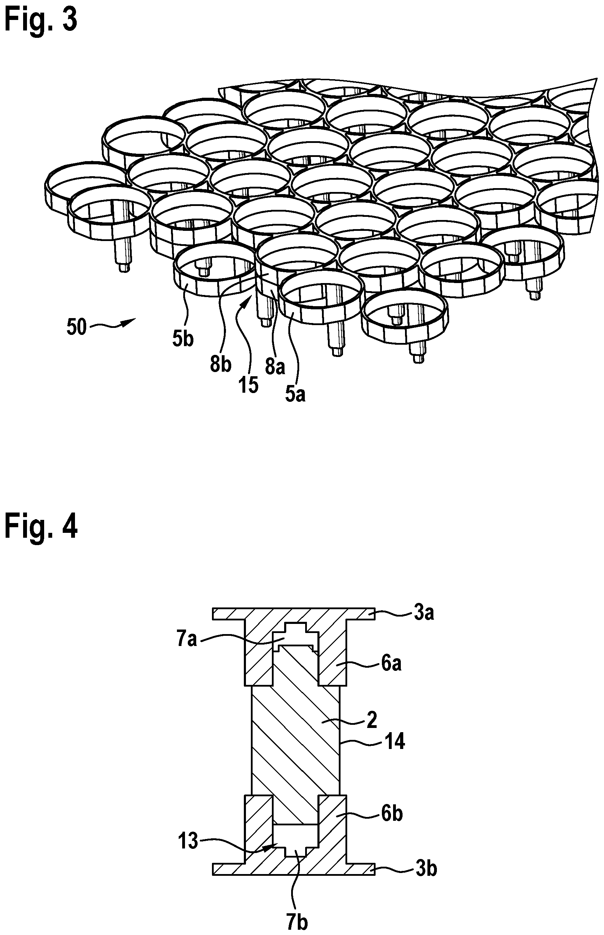

Figure 1 shows in an exploded view part of a battery cell holder according to an embodiment of the present invention, Figure 2 shows a holding element of a battery cell holder according to an embodiment of the present invention and Figure 3 shows a cell holding system according to an embodiment of the present invention.

In Figure 1 a battery cell holder 1 is shown, comprising an upper half shell 3a and a lower half shell 3b. Between the lower and upper half shell 3a, 3b, a plurality of ring-shaped holding elements 5 are arranged. The lower and upper half shell 3a, 3b together with the holding elements 5 provide a fixing of cylindrical battery cells 2 arranged between the lower and upper half shell 3a, 3b and in the ring-shaped holding elements 5. The remaining space 4 in which part of the circumferential surface 14 of the battery cells 2 is accessible, is used to be applied with a cooling fluid like a dielectric fluid to cool the battery cells 2 in operation.

Figure 2 shows a single holding element 5 with an inserted cylindrical battery cell 2 with circumferential surface 14. The holding element 5 has a central holding structure 8c in form of a ring. On the outer circumference of the central holding structure 8c a plurality of similar ring-shaped holding structures 8a, 8b are arranged, here six holding structures 8a, 8b. Adjacent holding structures 8a, 8b are arranged on different vertical levels (vertical axis 9 corresponds to the symmetry axis of the ring shaped holding structures 8a, 8b, 8c or of the battery cells 2) with distance 10, such that on top of the lower holding structures 8a, an upper holding structure 8b of another holding element 5 can be arranged. In this way, the upper and lower holding structure 8a, 8b are overlapping, such that within said both lower and upper holding structure 8a, 8b, a battery cell 2 can be arranged. This allows for a fixing of adjacent holding elements 5 not only by the half shells 3a, 3b but also by the battery cells 2, which may be additionally fixed by the half shells 3a, 3b. When viewed from the top along the axis, the holding element 5 comprises a hexagonal structure 11 of holding elements 8a, 8b with a center holding element 8c.

Further, the holding element 5 comprises elongated distance elements 12, which have their main extension along the axis 9, which on the one hand can be attached to the upper and/or lower shell 3a, 3b and on the other hand provide a spatial distancing of at least two adjacent battery cells 2 when being arranged within the holding structures 8a, 8b, 8c.

The outer surface of the ring shaped holding structures 8a, 8b, 8c may have one or more flat areas 16, such that adjacent holding elements 5 with their holding structures 8a, 8b, 8c can lie flat against each other.

Figure 3 shows an arrangement 50 of a plurality of different holdings elements 5a, 5b with their lower holding structures 8a and their upper holding structures 8b being arranged such to form an overlapping region 15, in which an upper holding structure 8b of a holding element 5b is arranged on top of a lower holding structure 8a of an adjacent holding element 5a.

Figure 4 shows a cross-section of a battery cell holder according to an embodiment of the present invention.

In Figure 4 a battery cell 2 is shown, fixed at the upper and lower side by holding clamps 6a, 6b of the respective upper and lower shell 3a, 3b. The holding clamps 6a, 6b grip partially a part of the lower and upper circumferential surface 14 of the battery cell 2 such that the battery cell 2 is securely fixed. The holding clamps 6a, 6b each provide a thermal management channel with T-shaped cross-sections 13 for a cooling fluid or the like to cool the upper and lower end of the battery cell 2, which are arranged within the holding clamps 6a, 6b.

These thermal management channels 7a, 7b of each holding clamp 6a, 6b can be aligned for example in an arrangement for the battery cells 2 as shown in Figure 3, to each other such that a continuous flow of a thermal management fluid in a common direction can be provided.

The shells 3a, 3b, the holding elements 5, the holding structures 8a, 8b, 8c, the holding clamps 6a, 6b can be made of plastic. Further, in other embodiments not only two shells but for instance three or more shells can be provided to form a sealed inner space, for instance with two outer shells and a middle shell in between, fixed with each other. Also, the shells may be formed by or include different parts or elements.

The thermal management fluid can be a cooling fluid, in particular a dielectric or nonconductive fluid, in particular the fluid can be a liquid.

At least one embodiment may provide at least one of the following features and/or at least one of the following advantages:
- Easy and less cost-intensive manufacturing.
- Higher reliability of the operation of the battery cells.
- High integration level.
- Easy and secure arrangement of the battery cells.
- A larger contact area of the surface of the battery cells for the thermal management.
- Flexible and sufficient thermal management.
- Lesser weight compared to conventional battery cell holders.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1: Battery cell holder
- 2: Battery cell
- 3a: Upper half shell
- 3b: Lower half shell
- 4: Inner space
- 5, 5a, 5b: Holding element
- 6a, 6b: Holding clamp
- 7a, 7b: Thermal management channel
- 8a: Lower holding structure
- 8b: Upper holding structure
- 8c: Central holding structure
- 9: Vertical axis
- 10: Distance
- 11: Hexagonal structure
- 12: Distance element
- 13: T-shaped cross-section
- 14: Circumferential surface
- 15: Overlapping region
- 16: Flat area

- 50: Holding element arrangement

## Claims

1. Battery cell holder (1) for thermal management, in particular for immersion thermal management, of a plurality of battery cells (2), comprising
a first shell (3a),
a second shell (3b), wherein the first shell (3a) and the second shell (3b) are attachable to each other forming a sealed inner space (4) for arranging a plurality of battery cells (2) within said inner space (4) and wherein a thermal management fluid can be applied to the inner space (4) for thermal management, preferably cooling the battery cells (2),
**characterized in that**
a) at least one holding element (5, 5a, 5b) separated from the first and second shell (3a, 3b) being adapted to fix a position of at least two of said plurality of battery cells (2) and/or that
b) the first shell (3a) and/or the second shell (3b) are provided with fixing elements (6a, 6b) adapted to provide a fixing function for said plurality of battery cells (2), wherein the first shell (3a) and/or the second shell (3b) comprise at least one thermal management channel (7a, 7b) for thermal management of at least a part of the battery cells (2) fixed by the first shell (3a) and/or the second shell (3b).

2. Battery cell holder (1) according to claim 1, **characterized in that** said at least one holding element (5, 5a, 5b) comprises a plurality of holding structures (8a, 8b, 8c), each for a battery cell (2).

3. Battery cell holder (1) according to claim 2, **characterized in that** a holding structure (8a, 8b, 8c), at least partly, preferably completely, provides a ring-shaped reception for insertion of a battery cell (2).

4. Battery cell holder (1) according to claim 2 or 3, **characterized in that** adjacent holding structures (8a, 8b) are offset to each other, preferably along a symmetry axis (9) of the holding element (5, 5a, 5b).

5. Battery cell holder (1) according to one of the claims 2-4, **characterized in that** said holding structures (8a, 8b) of said at least one holding element (5, 5a, 5b) are arranged in a regular hexagon structure (11) around a center of said holding element (5, 5a, 5b), preferably wherein the center of said hexagon structure (11) is provided as a holding structure (8c).

6. Battery cell holder (1) according to one of the claims 1-5, **characterized in that** said at least one holding element (5, 5a, 5b) comprises at least one distance element (12) for spacing said at least one holding element (5, 5a, 5b) from the first shell (3a) and/or the second shell (3b).

7. Battery cell holder (1) according to claim 6, **characterized in that** said at least one distance element (12) is adapted to be, preferably releasably, connectable to said first shell (3a) and/or said second shell (3b), in particular by insertion of said at least one distance element (12) into said first shell (3a) and/or said second shell (3b).

8. Battery cell holder (1) according to claim 7, **characterized in that** said at least one distance element (12) is adapted to space apart at least two adjacent battery cells (2) when arranged in adjacent holding structures (8a, ,8b, 8c).

9. Battery cell holder (1) according to one of the claims 6-8, **characterized in that** a plurality of distance elements (12) is provided, arranged symmetrically to each other at said at least one holding element (5, 5a, 5b).

10. Battery cell holder (1) according to one of the claims 1-9, **characterized in that** said at least one thermal management channel (7a, 7b) has a T-shaped cross section (13).

11. Battery cell holder (1) according to one of the claims 1-10, **characterized in that** said at least one holding element (5, 5a, 5b), said first shell (3a) and/or said second shell (3b) are made of plastic.

12. Thermal management structure for a battery, comprising a battery cell holder (1) according to one of the claims 1-11 and a plurality of battery cells (2) for arranging in said battery cell holder (1), preferably wherein a holding structure (8a, 8b, 8c) of a holding element (5, 5a, 5b) covers 50% or less of a circumferential surface (14) of a battery cell (2), preferably 40% or less, in particular 30% or less, preferably 20% or less, in particular 15% or less, preferably 10% or less, preferably 5% or less and 1% or more, preferably 2% or more, preferably 4% or more, preferably 10% or more.

13. Thermal management structure according to claim 12, **characterized in that** the battery cells (2) have cylindrical form and said holding elements (5, 5a, 5b) are at least in part ring-shaped to hold the battery cells (2) and/or that said at least one holding element (5, 5a, 5b) is arranged between 40% and 60% of the distance (10) in the inner space (4) between the first shell (3a) and the second shell (3b), preferably between 45% and 55%, preferably centrally.

14. Cell holding system (50) comprising a battery cell holder (1) according to one of the claims 1-11, with at least two holding elements (5, 5a, 5b), wherein at least one holding structure (8a, 8b, 8c) of each of said at least two holding elements (5, 5a, 5b) is arranged such to hold a same battery cell (2).

15. Battery comprising a thermal management structure according to one of the claims 12-13 and a thermal management device, connectable to an inlet of said thermal management structure, for providing a thermal management fluid, preferably a cooling fluid, to said thermal management structure for immersion thermal management of said battery cells (2), preferably wherein said cooling fluid is an electrically insulating fluid, preferably a dielectric fluid.
